(19) Europäisches Patentamt
European Patent Office
Office européen des brevets

(11) Veröffentlichungsnummer: **0 523 483 B1**

# (12) EUROPÄISCHE PATENTSCHRIFT

(45) Veröffentlichungstag der Patentschrift: **06.12.95**

(51) Int. Cl.$^6$: **C08J 9/22**, C08K 5/20, //C08L25/04

(21) Anmeldenummer: **92111355.1**

(22) Anmeldetag: **03.07.92**

## (54) Verfahren zur Herstellung von Siebfraktionen von durch Suspensionspolymerisation hergestellten perlförmigen expandierbaren Styrolpolymerisaten.

(30) Priorität: **13.07.91 DE 4123252**

(43) Veröffentlichungstag der Anmeldung:
**20.01.93 Patentblatt 93/03**

(45) Bekanntmachung des Hinweises auf die Patenterteilung:
**06.12.95 Patentblatt 95/49**

(84) Benannte Vertragsstaaten:
**AT BE DE ES FR GB IT NL**

(56) Entgegenhaltungen:
**EP-A- 0 114 503**
**US-A- 3 595 464**
**US-A- 3 960 787**

**DATABASE WPIL Derwent Publications Ltd., London, GB; AN 86228395(35) & JP-A-61 157 538**

**CHEMICAL ABSTRACTS, vol. 96, no. 24, 14. Juni 1982, Columbus, Ohio, US; abstract no. 200777c, " THEMOPLASTIC MOLDING MATERIALS" Seite 486 & JP-A-57 008 104**

**DATABASE WPIL Derwent Publications Ltd., London, GB; AN 8174548D(41) & JP-A-56 106 930**

**CHEMICAL ABSTRACTS; AN 74:13722**

(73) Patentinhaber: **BASF Aktiengesellschaft**
**Carl-Bosch-Strasse 38**
**D-67063 Ludwigshafen (DE)**

(72) Erfinder: **Walter, Manfred, Dr.**
**Hans-Purrmann-Allee 18**
**W-6720 Speyer (DE)**

**EP 0 523 483 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Siebfraktionen von durch Suspensionspolymerisation hergestellten perlförmigen expandierbaren Styrolpolymerisaten.

Bei der großtechnischen Herstellung von expandierbaren Styrolpolymerisaten (EPS) durch Suspensionspolymerisation fällt immer eine Mischung von Perlen mit unterschiedlichen Perldurchmessern an. Man erhält eine bestimmte Perlgrößenverteilung. Die mittlere Perlgröße und in gewissen Grenzen auch die Breite der Verteilung sind durch geeignete Maßnahmen steuerbar. Ganz zu vermeiden ist das Phänomen der Perlgrößenverteilung aber nicht.

Die in der Praxis eingesetzen EPS-Produkte sind generell durch Siebung erhaltene Siebsschnitte aus solchen Perlgrößenverteilungen.

Für Formteile werden normalerweise Siebschnitte mit relativ kleinen mittleren Perlgrößen verwendet wie z.B. Siebschnitte von 0,4 bis 0,7 mm oder 0,7 bis 1,0 mm. Zur Herstellung von Schaumstoffblöcken werden Siebschnitte mit größeren mittleren Perlgrößen eingesetzt, so z.B. Siebschnitte mit 1,0 bis 1,4 mm oder 1,4 bis 2,0 mm. Daneben gibt es noch andere Siebschnitte für spezielle Anwendungen wie z.B. für Füllstoffe in Leichtputzen, zur Herstellung von porosierten Ziegelsteinen usw.

Nach Beendigung der Suspensionspolymerisation fällt eine Mischung aus EPS-Perlen unterschiedlicher Größe und dem wäßrigen Suspensionsmedium, auch Serum genannt, an. Das wäßrige Suspensionsmedium muß von den Perlen abgetrennt werden. Dies geschieht in hierzu geeigneten Geräten wie z.B. Siebschleudern. Solche Siebschleudern werden z.B. von der Fa. Siebtechnik, D-4330 Mülheim/Ruhr hergestellt. Die erhaltenen Perlen werden im allgemeinen noch mit Wasser gewaschen, um die noch vorhandenen Reste des Suspensionsstabilisierungssystems zu entfernen. Hierzu werden die Perlen in etwa der gewichtsmäßig gleichen Menge an Wasser, vorzugsweise mit Trinkwasserqualität, aufgeschlämmt. Das Waschwasser muß dann ebenfalls wieder entfernt werden. Dies kann z.B. mit den gleichen Aggregaten vorgenommen werden, die bereits zur Abtrennung des Serums benutzt wurden.

Nach der Abtrennung des Waschwassers erhält man die Mischung der Perlen unterschiedlicher Größe, die aber noch eine gewisse Restfeuchte auf ihren Oberflächen mit sich führen. Bevor die Perlen durch Siebung in die entsprechenden Siebschnitte aufgetrennt werden, muß dieses Oberflächenwasser entfernt werden, da die Perlen sonst aneinander haften und eine effektive Siebung verhindert bzw. außerordentlich erschwert wäre.

Die Entfernung des an den Perloberflächen anhaftenden Wassers geschieht im allgemeinen in sogenannten Stromtrocknern, in denen die Perlen in einem Warmluftstrom vom Oberflächenwasser befreit werden. Bei der Trocknung werden im allgemeinen Eingangstemperaturen zwischen 30 und 65 °C verwendet. Zu geringe Temperaturen führen zu einer unzureichenden Trocknung. Andererseits dürfen die Temperaturen nicht zu hoch sein, da sonst ein Anschäumen der EPS-Perlen zu befürchten wäre.

Nach der Entfernung des Oberflächenwassers (Blitztrocknung) könnte die Perlmischung prinzipiell einer geeigneten Siebvorrichtung zugeführt werden. Es hat sich in der Praxis aber herausgestellt, daß für die Siebung von EPS-Perlen noch eine Siebhilfe in Form einer ersten Oberflächenbeschichtung der Perlen erforderlich ist. Diese Siebhilfe hat zwei Aufgaben zu erfüllen. Sie hat einmal zu verhindern, daß die Perlen elektrostatisch aufgeladen werden und die Siebung so erschwert oder verhindert wird. Weiter hat die Siebhilfe die Perlen vor einer mechanischen Beschädigung ihrer Oberflächen infolge der mechanischen Beanspruchung durch die Bewegung über die Siebbespannungen und beim Transport von und zu den Sieben zu schützen. Solche mechanischen Beschädigungen führen bei der Verarbeitung von EPS-Perlen zu Schaumstoffen zu Störungen, insbesondere zum Zusammenbacken der Perlen beim Vorschäumen.

Entsprechend ihrer Funktion besteht die Siebhilfe im allgemeinen aus zwei Komponenten. Erstens aus einem Antistatikum, das die elektrostatische Aufladung verhindert und zweitens aus einem Gleitmittel, das den Schutz gegen mechanische Oberflächenbeschädigung bewirkt.

Als Komponente für den Schutz gegen mechanische Oberflächenbeschädigungen wurde bisher in der Regel Zn-Stearat verwendet.

Aus ökologischen Gründen ist die Verwendung von Schwermetallsalzen aber problematisch. Man sucht daher solche Salze durch geeignete Substanzen ohne Schwermetallgehalt zu ersetzen.

Auf der ersten Beschichtung, auch Siebhilfe genannt, werden in der Regel nach der Siebung weitere Beschichtungen aufgebracht, die den Produkten die erforderlichen verarbeitungstechnischen oder anwendungstechnischen Eigenschaften verleihen. Es ist hierbei wünschenswert, daß die erste Beschichtung die Haftung der in den weiteren Beschichtungsschritten aufgebrachten Beschichtungsmittel verbessert.

In der DE-A 17 69 096 sind feinteilige expandierbare Styrolpolymerisate beschrieben, die mindestens 50 Gew.-% Styrol einpolymerisiert enthalten und mit einem Puderungsmittel und einem Silikon der Zusammensetzung $R_2SiO$ überzogen sind. Als Puderungsmittel sind N,N'-Distearoylethylendiamin und

Zinkstearat genannt.

In der DE-A 17 69 475 sind feinteilige expandierbare Styrolpolymerisate beschrieben, die mit 0,005 bis 0,5 Gew.-%, bezogen auf das Gewicht der Styrolpolymerisate, eines Polytrifluorchlorethylens beschichtet sind. Die Rieselfähigkeit und Verarbeitbarkeit dieser feinteiligen expandierbaren Styrolpolymerisate sollen verbessert sein, wenn die Beschichtung außer Polytrifluorchlorethylen 0,005 bis 0,5 Gew.-% (bezogen auf das Styrolpolymerisat) eines Puderungsmittels, z.B. einer Verbindung der Formel $R^1$-NH-$(CH_2)_n$-NH-$R^2$ enthält, in der n gleich 2, 3 oder 4 ist und $R^1$ und $R^2$ Fettsäurereste mit 12 bis 18 Kohlenstoffatomen bedeuten. Die an sich als Puderungsmittel für feinteilige expandierbare Styrolpolymerisate bekannten Stoffe sollen zusätzlich die Rieselfähigkeit der Styrolpolymerisate im ungeschäumten Zustand verbessern und die Klumpenbildung beim Vorschäumen vermindern. Die Stoffe der allgemeinen Formel wie N,N'-Distearoylethylendiamin, sollen außerdem die Verschweißung der vorgeschäumten Teilchen beim Aufschäumen zu Formkörpern weniger beeinträchtigen als andere übliche Puderungsmittel, wie Zinkstearat, und zusätzlich die Rieselfähigkeit der frisch geschäumten Teilchen verbessern.

Aus der JP-A-61/157538 ist die Beschichtung von expandierbarem Polystyrol mit einer Mischung aus Ethylenbis (stearat) amid und 12-Hydroxystearyltriglycerid bekannt.

Aufgabe der vorliegenden Erfindung war es nun, ein Beschichtungsmittel, insbesondere für eine erste Beschichtung vor der Siebung, aufzuzeigen, welches keine Schwermetalle enthält und gegenüber den bekannten, in der Regel Zn-stearathaltigen Beschichtungsmitteln den Schutz gegen mechanische Oberflächenbeschädigungen erhöht sowie die Haftung der nach der Siebung auf die einzelnen Siebschnitte aufzubringenden Beschichtungsmittelmischungen verbessert.

Diese Aufgabe wird überraschend gelöst, wenn für die erste Beschichtung Beschichtungsmittel aus einem bestimmten Bisamid und einem Antistatikum verwendet werden.

Gegenstand der Erfindung ist dahzu ein Verfahren zur Herstellung von Siebfraktionen von durch Suspensionspolymerisation hergestellten perlförmigen expandierbaren Styrolpolymerisaten, bei dem man die noch oberflächenfeuchten Perlen mit 0,02 bis 0,25 Gew.-%, bezogen auf die getrockneten Styrolpolymerisate, eines ersten Beschichtungsmittels (c) aus

($c_1$) einem Bisamid aus einem $C_2$-$C_8$-Alkylendiamin und einer aliphatischen $C_6$-$C_{20}$-Carbonsäure und

($c_2$) einem üblichen Antistatikum

im Gewichtsverhältnis ($c_1$):($c_2$) = 1 bis 50 innig vermischt, anschließend durch Blitztrocknung bei einer Temperatur zwischen 30 und 65 °C für 1 bis 10 sec das Oberflächenwasser entfernt, danach die trockenen, beschichteten Perlen in Siebfraktionen auftrennt und gegebenenfalls anschließend auf die einzelnen Fraktionen weitere Mengen an Beschichtungsmittel aufbringt.

Die expandierbaren Styrolpolymerisate enthalten Polystyrol und/oder Styrolcopolymerisat mit mindestens 50 Gew.-%, vorzugsweise mindestens 80 Gew.-% einpolymerisiertem Styrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure (anhydrid). Vorteilhaft kann das Polystyrol eine geringe Menge eines Kettenverzweigers einpolymerisiert enthalten, d.h. einer Verbindung mit mehr als einer, vorzugsweise zwei Doppelbindungen, wie Divinylbenzol, Butadien oder Butandioldiacrylat. Der Verzweiger wird im allgemeinen in Mengen von 0,005 bis 0,05 Mol-%, bezogen auf Styrol, verwendet.

Vorteilhaft verwendet man Styrolpolymerisate mit Molekulargewichten und Molgewichtsverteilung, wie sie in der EP-B 106 129 und der DE-A 39 21 148 beschrieben sind.

Auch Mischungen verschiedener Styrolpolymerisate können verwendet werden, wie sie beispielsweise in der DE-A 39 01 329, 39 08 238, 39 36 596, 39 31 862 und 39 16 602 beschrieben sind.

Die expandierbaren Styrolpolymerisate liegen im allgemeinen in Partikelform, insbesondere in Perlform vor, vorteilhaft mit einem mittleren Durchmesser von 0,05 bis 6 mm, insbesondere 0,3 bis 3 mm. Die Herstellung erfolgt in an sich bekannter Weise durch Suspensionspolymerisation.

Die Grundlagen der Suspensionspolymerisation sind beschrieben in "Encyclopedia of Polymer Science and Technology", Volume 13, Seiten 552-570, John Wiley & Sons, Inc., New York, 1970. Dazu wird Styrol, gegebenenfalls unter Zusatz weiterer Comonomerer, in wäßriger Suspension in Gegenwart eines üblichen Suspensionsstabilisators mittels radikalbildender Katalysatoren polymerisiert. Vorteilhaft setzt man bei der Polymerisation einen Regler und/oder einen Kettenverzweiger zu, beispielsweise in einer Menge von 0,005 bis 0,05 Mol-%. Das Treibmittel und gegebenenfalls die Zusatzstoffe können dabei bei der Polymerisation mit vorgelegt werden oder im Laufe der Polymerisation oder nach beendeter Polymerisation dem Ansatz zugefügt werden.

Die expandierbaren Styrolpolymerisate enthalten 1 bis 10 Gew.-% eines Treibmittels oder Treibmittelgemisches, beispielsweise 1 bis 10 Gew.-%, vorzugsweise 3 bis 8 Gew.-% eines $C_3$-bis $C_6$-Kohlenwasserstoffs, wie Propan, Butan, Isobutan, n-Pentan, i-Pentan, Neopentan und/oder Hexan. Vorzugsweise wird ein

handelsübliches Pentan-Gemisch verwendet.

Die erfindungsgemäß wesentliche Komponente (c) ist das zumindest als erste Beschichtung auf den expandierbaren Styrolpolymerisaten vorliegende Beschichtungsmittel aus

($c_1$) einen Bisamid aus einem $C_2$-$C_8$-Alkylendiamin und einer aliphatischen $C_6$-$C_{20}$-Carbonsäure und

($c_2$) einem üblichen Antistatikum.

Die erfindungsgemäßen Bisamide ($c_1$) entsprechen der allgemeinen Formel I,

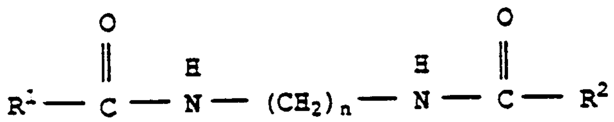

I,

worin n = 2 bis 8 und $R^1$, $R^2$ = $C_5$-$C_{19}$-Alkenyl oder Alkylgruppen darstellen.

Erfindungsgemäß bevorzugt sind hierbei Bisamide, die sich von 1,2-Ethylendiamin ableiten (n = 2).

Besonders bevorzugt werden die oberhalb von 130 °C schmelzenden Bisstearate von 1,2-Ethylendiamin und aliphatischen $C_{16}$-$C_{20}$-Carbonsäuren eingesetzt. Ganz besonders bevorzugt wird N,N'-Bisethylenstearamid eingesetzt.

Die Bisamide sollen in feinteiliger Form eingesetzt werden. Die Teilchendurchmesser liegen im allgemeinen überwiegend unterhalb von 0,1 mm. Vorzugsweise liegen bei mindestens 80 Gew.-% der Teilchen die Durchmesser unterhalb von 0,07 mm, besonders bevorzugt bei mindestens 90 Gew.-% der Teilchen unterhalb 0,04 mm.

Die Teilchengrößen lassen sich durch Strahlsiebanalysen ermitteln.

Geeignete Diamide werden beispielsweise von der Firma Glyco Chemicals Inc. unter der Bezeichnung Acrawax®, powdered oder atomized, oder von der Firma Comiel unter der Bezeichnung Syntewax® angeboten.

Als Antistatikum ($c_2$) können die in der Technik üblichen und gebräuchlichen Substanzen verwendet werden. Beispiele sind N,N-Bis(2-hydroxyethyl)-$C_{12}$-$C_{18}$-alkylamine, Fettsäurediethanolamide, Cholinesterchloride von Fettsäuren, $C_{12}$-$C_{20}$-Alkylsulfonate, Ammoniumsalze usw.

Geeignete Ammoniumsalze enthalten am Stickstoff neben Alkylgruppen 1 bis 3 hydroxylgruppenhaltige organische Rente.

Geeignete quaternäre Ammoniumsalze sind beispielsweise solche, die am Stickstoff-Kation 1 bis 3, vorzugsweise 2, gleiche oder verschiedene Alkylreste mit 1 bis 12, vorzugsweise 1 bis 10 C-Atomen, und 1 bis 3, vorzugsweise 2 gleiche oder verschiedene Hydroxyalkyl- oder Hydroxyalkylpolyoxyalkylen-Reste gebunden enthalten, mit einem beliebigen Anion, wie Chlorid, Bromid, Acetat, Methylsulfat oder p-Toluolsulfonat.

Die Hydroxyl- und Hydroxyalkyl-polyoxyalkylen-Reste sind solche, die durch Oxyalkylierung eines Stickstoff-gebundenen Wasserstoffatoms entstehen und leiten sich von 1 bis 10 Oxyalkylenresten, insbesondere Oxyethylen- und Oxypropylen-Resten ab.

$$[\ \geqslant N\text{-}(CH_2\text{-}CH_2\text{-}O)_n\text{-}H\ ;\qquad \geqslant N\text{-}(CHCH_3\text{-}CH_2\text{-}O)_n\text{-}H\ ;\qquad n = 1\text{-}10]$$

Vorzugsweise verwendet man Bis-(2-hydroxyethyl)-octyl-methyl-ammonium-p-toluolsulfonat, Bis-(2-hydroxypropyl)-dioctyl-ammonium-chlorid, Tris-(2-hydroxyethyl)-methyl-ammonium-acetat und das durch Umsetzung von Ammoniak mit 15 Mol Ethylenoxid und anschließend Quaternisierung mit Dimethylsulfat erhaltene Ammoniumsalz.

Das Beschichtungsmittel (c) enthält die Komponenten ($c_1$) und ($c_2$) im Gewichtsverhältnis 1 bis 50, vorzugsweise 1 bis 20 und besonders bevorzugt 3 bis 12. Es wird in einer Menge, bezogen auf das Styrolpolymerisat (a), von 0,02 bis 0,25, vorzugsweise 0,03 bis 0,2 und besonders bevorzugt 0,04 bis 0,15 Gew.-% eingesetzt.

Das Beschichtungsmittel (c) wird vor der Herstellung von Siebfraktionen durch Siebung auf die Treibmittel enthaltenden, in der Regel noch feuchten Polymerperlen aufgebracht. Die noch unbeschichteten Polymerperlen erhalten hierdurch eine erste Beschichtung.

Daneben kann es auch vorteilhaft sein, das Beschichtungsmittel (c) zusätzlich nach der Siebung auf die Oberfläche der expandierbaren Styrolpolymerisate aufzubringen.

Die Siebung kann in geeigneten Siebvorrichtungen durchgeführt werden. Solche Siebvorrichtungen werden z.B. von den Firmen Engelsmann, D-6700 Ludwigshafen, Allgeier, D-7336 Uhingen oder Zentrifugiertechnik GmbH, D-4220 Dinslaken hergestellt.

Nach der Aussiebung in für marktfähige Produkte passende Siebschnitte werden die einzelnen Siebfraktionen in hierfür geeigneten Aggregaten mit weiteren Substanzen oder Mischungen von Substanzen oberflächlich beschichtet, um den Produkten die erforderlichen verarbeitungstechnischen oder anwendungstechnischen Eigenschaften zu verleihen. Es sind dies insbesondere kurze Entformzeiten beim Formschäumen, geringe Verklebung beim Vorschäumen, geringe Wasseraufnahme beim Formschäumen usw.

Solche Beschichtungssubstanzen sind die Mono-, Di- und Tristearate von Glycerin, Zitronensäuretristearolester, Sorbitanfettsäureester, feinteilige Kieselsäuren, Erdalkalimetallstearate usw. Für spezielle Anwendungen sind ferner Antistatika, Flammschutzmittel, Farbstoffe, Schmiermittel und Füllstoffe usw. in wirksamen Mengen in Gebrauch.

Um eine gute und gleichmäßige Haftung der Beschichtung auf den Polymerisat-Perlen zu gewährleisten, kann gegebenenfalls ein üblicher Haftvermittler mitverwendet werden. Geeignet sind beispielsweise wäßrige Dispersionen von Polyvinylacetat, Polyvinylpropionat, Polyethylacrylat, Polybutylacrylat und Styrol-Butadien-Copolymerisate.

Die nach dem erfindungsgemäßen Verfahren behandelten expandierbaren Styrolpolymerisate weisen zahlreiche Vorteile auf.

Die Perloberflächen sind beim Siebvorgang hervorragend geschützt, so daß keine mechanische Beschädigung erfolgen kann und die Verklebungswerte beim Vorschäumen der EPS-Perlen gering bleiben. Es tritt kein Treibmittelverlust beim Stromtrocknen auf und die Haftung der nach der Siebung auf die einzelnen Siebschnitte aufgebrachten Beschichtungsmittelmischungen wird verbessert.

Für die Herstellung von Schaumstoffen werden die expandierbaren Styrolpolymerisate in bekannter Weise durch Erhitzen auf Temperaturen oberhalb ihres Erweichungspunkts, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Diese können dann gegebenenfalls nach Abkühlung und Zwischenlagerung in bekannter Weise in nicht gasdicht schließenden Formen zu Formteilen verschweißt werden.

Die erhaltenen Schaumstoffe weisen im allgemeinen eine Dichte von etwa 0,01 bis 0,1 g/cm$^3$ auf. Sie finden Verwendung u.a. als Wärme- und Schalldämmstoffe, als Polstermaterial und für stoßdämpfende Verpackungen.

Die in den Beispielen genannten Teile sind Gewichtsteile.

Beispiele

Suspensionspolymerisation

In einen druckfesten Rührgefäß wurde eine Mischung aus 150 Teilen Wasser, 0,1 Teilen Natriumpyrophosphat, 100 Teilen Styrol, 0,15 Teilen Benzoylperoxid und 0,25 Teilen tert.-Butylperbenzoat 2 Stunden unter Rühren auf 90 °C erhitzt. Nach 1 Stunde bei 90 °C wurden 4 Teile einer 10 %igen wäßrigen Lösung von Polyvinylpyrrolidon als Suspensionsstabilisator zugefügt. Dann wurde zwei weitere Stunden bei 90 °C, anschließend 2 Stunden bei 100 °C und schließlich 2 Stunden bei 120 °C gerührt. 5 Stunden nach Polymerisationsbeginn wurden 7 Teile Pentan zugefügt.

Die Vorteile der Erfindung seien anhand des Beispiels und des Vergleichsbeispiels erläutert, in denen zur Beschichtung jeweils von dem wie vorstehend erhaltenen Styrolpolymerisat ausgegangen wurde.

Beispiel

Ein Perlpolymerisationsansatz von expandierbarem Polystyrol (EPS) wurde nach Beendigung der Polymerisation und Abkühlung auf Raumtemperatur aus dem druckfesten Reaktionskessel entnommen. Mittels einer Siebschleuder wurden die EPS-Perlen mit einem Durchmesser > 0,2 mm von dem wäßrigen Serum abgetrennt. Anschließend wurden sie in der gewichtsmäßig gleichen Menge Wasser (Trinkwasserqualität) aufgeschlämmt und erneut vom Wasser abgetrennt.

Die oberflächenfeuchten EPS-Perlen wurden anschließend mit einer Förderschnecke in einem Stromtrockner eingetragen, wo durch erwärmte Luft mit einer Temperatur von 60 °C die Oberflächenfeuchte entfernt wurde. In die Förderschnecke zum Stromtrockner wurden entsprechend dem Strom der feuchten EPS-Perlen über eine Dosierbandwaage und eine kleine Förderschnecke N,N'-Bisethylenstearamid und über eine Dosierpumpe eine wäßrige Lösung von Natrium ($C_{14}$-$C_{17}$) -alkylsulfonat eindosiert. Die Mengenströme wurden so eingestellt, daß sich 0,06 Gew.-% N,N'-Bisethylenstearamid und 0,006 Gew.-% Alkylsulfonat, jeweils auf die Gesamtmenge der trockenen EPS-Perlen bezogen, befanden.

Nach dem Verlassen des Stromtrockners wurden die EPS-Perlen in einem Engelsmann-Sieb in die folgenden Siebschnitte unterteilt:

< 0,4 mm
0,4 bis 0,7 mm (Fraktion 1)
0,7 bis 1,0 mm (Fraktion 2)
1,0 bis 1,3 mm (Fraktion 3)
1,3 bis 1,8 mm (Fraktion 4)
> 1,8 mm

Die Perlen mit Durchmessern < 0,4 und >1,8 mm wurden verworfen. Die Siebschnitte entsprechend Durchmessern von 0,4 bis 0,7 mm und 0,7 bis 1,0 mm wurden dann in einem Schaufelmischer der Fa. Lödige mit 0,4 Gew.-% einer Mischung aus 95 Gew.-% Glycerinmonostearat und 5 Gew.-% feinteiliger Kieselsäure oberflächlich beschichtet. Die Siebschnitte 1,0 bis 1,3 mm und 1,3 bis 1,8 mm wurden mit 0,3 Gew.-% der gleichen Mischung in der gleichen Apparatur oberflächenbeschichtet.

Nach 72 Stunden Lagerung der Produkte in geschlossenen Gebinden wurden 3 Prüfungen vorgenommen.

1) Bestimmung der Verklebung beim Vorschäumen im kontinuierlichen Vorschäumer Typ Rauscher C 69,

2) Bestimmung der Verklebung beim Vorschäumen im diskontinuierlichen Vorschäumer Typ Haendle 100,

3) Bestimmung des nicht fest auf den Perlen haftenden Anteils der Beschichtung durch Windsichten.

Zur Bestimmung der Verklebung wurden die nach dem Vorschäumen und Trocknen erhaltenen Perlen durch ein Sieb der Maschenweite 8 mm gesiebt. Der verklebte (verbackene) Anteil wurde abgetrennt und gewogen. In den Tabellen 1 und 2 sind für die Fraktionen 1 bis 4 die Anteile des verklebten Materials in Gew.-%, bezogen auf die Gesamtmasse der vorgeschäumten Perlen, angegeben.

Tabelle 1

| Kontinuierlicher Vorschäumer: Rauscher C 69 | | |
|---|---|---|
| Fraktion | Beispiel | Vergleichsbeispiel |
| 1 | 3,7 | 4,1 |
| 2 | 2,8 | 2,7 |
| 3 | 0,4 | 0,6 |
| 4 | 0,15 | 0,2 |

Tabelle 2

| Diskontinuierlicher Vorschäumer: Haendle 100 | | |
|---|---|---|
| Fraktion | Beispiel | Vergleichsbeispiel |
| 1 | 4,8 | 5,2 |
| 2 | 3,1 | 3,3 |
| 3 | 0.7 | 0,6 |
| 4 | 0,2 | 0,3 |

Zur Bestimmung des Anteils an Beschichtungsmitteln, der nicht fest auf den Perloberflächen haftet, wurden in einen Glaszylinder, der nach unten mit einer Glasfritte abgeschlossen war, 600 g der wie vorstehend beschrieben beschichteten EPS-Perlen eingefüllt. Durch die Schüttung wurde von unten für 10 Minuten bei Raumtemperatur ein Luftstrom von 90 $m^3/h$ geleitet. Durch diesen Luftstrom wurde der nicht fest an den Perloberflächen haftende Anteil der Beschichtung aus dem Zylinder ausgeblasen.

Von je 100 g Perlen wurde vor und nach dem Ausblasvorgang jeweils zweimal mit Isopropanol die Beschichtung abgewaschen. Die Waschwässer der beiden Abwaschvorgänge wurden jeweils vereint und in

einem Rotationsverdampfer zur Trockene eingedampft. Die Rückstände wurden ausgewogen. Die Gewichtsdifferenz zwischen den Beschichtungen vor und nach dem Ausblasvorgang ergibt den Anteil des nicht fest auf den Perloberflächen haftenden Beschichtungsmittels.

In der Tabelle 3 sind für das Beispiel und das Vergleichsbeispiel die Mengen an Beschichtungsmittel in Gew.-%, bezogen auf das Gewicht der trockenen Perlen, vor und nach dem Ausblasen angegeben. Der Verlust an Beschichtungsmittel ist in Tabelle 3 absolut (in Gew.-%) und relativ (in %), bezogen auf die Menge des Beschichtungsmittels vor dem Aufblasen, angegeben.

Vergleichsbeispiel

Es wurde genauso verfahren wie im Beispiel, nur wurde statt N,N'-Bisethylenstearamid 0,06 Gew.-% Zn-Stearat in die Förderschnecke zum Blitztrockner dosiert.

Die experimentellen Ergebnisse sind in den Tabellen 1 bis 3 angegeben. Die in den Tabellen aufgeführten Ergebnisse belegen, daß durch die Verwendung von N,N'-Bisethylenstearamid an Stelle von Zn-Stearat als Blitztrocknerbeschichtung die Verklebung beim Vorschäumen vermindert wird und daß die Haftung der Hauptbeschichtung auf den Perlen verbessert wird.

Tabelle 3

| Fraktion | Beispiel | | | | Vergleichsbeispiel | | | |
|---|---|---|---|---|---|---|---|---|
| | vor Ausblasen | nach Ausblasen | Verlust (abs.) | Verlust (rel.) | vor Ausblasen | nach Ausblasen | Verlust (abs.) | Verlust (rel.) |
| 1 | 0,51 | 0,45 | 0,06 | 11,8 % | 0,52 | 0,42 | 0,1 | 19,2 % |
| 2 | 0,50 | 0,46 | 0,04 | 8,0 % | 0,51 | 0,43 | 0,08 | 15,7 % |
| 3 | 0,36 | 0,33 | 0,03 | 8,3 % | 0,35 | 0,3 | 0,05 | 14,3 % |
| 4 | 0,34 | 0,325 | 0,015 | 4,4 % | 0,33 | 0,3 | 0,03 | 9,1 % |

## Patentansprüche

**1.** Verfahren zur Herstellung von Siebfraktionen von durch Suspensionspolymerisation hergestellten perlförmigen expandierbaren Styrolpolymerisaten, dadurch gekennzeichnet, daß man die noch oberflächenfeuchten Perlen mit 0,02 bis 0,25 Gew.-%, bezogen auf die getrockneten Styrolpolymerisate, eines Beschichtungsmittels aus

($c_1$) einem Bisamid aus einem $C_2$-$C_8$-Alkylendiamin und einer aliphatischen $C_6$-$C_{20}$-Carbonsäure und

($c_2$) einem üblichen Antistatikum

im Gewichtsverhältnis ($c_1$):($c_2$) = 1 bis 50 innig vermischt, anschließend durch Blitztrocknung bei einer Temperatur zwischen 30 und 65 °C für 1 bis 10 sec das Oberflächenwasser entfernt, danach die trockenen, beschichteten Perlen in Siebfraktionen auftrennt und gegebenenfalls anschließend auf die einzelnen Fraktionen weitere Mengen an Beschichtungsmittel oder Beschichtungsmittelmischungen aufbringt.

**2.** Verfahren nach Anspruch 6, dadurch gekennzeichnet, daß ($c_1$) N,N'-Bisethylenstearamid und ($c_2$) $C_{14}$-$C_{17}$-Alkylsulfonat ist.

**3.** Verfahren nach Anspruch 7, dadurch gekennzeichnet, daß die Beschichtungsmittelkomponente ($c_1$) zu mehr als 80 Gew.-% aus Teilchen besteht, deren Durchmesser unterhalb von 0,07 mm liegt.

**4.** Verfahren nach Anspruch 8, dadurch gekennzeichnet, daß die Beschichtungsmittelkomponente ($c_1$) zu mehr als 90 Gew.-% aus Teilchen besteht, deren Durchmesser unterhalb von 0,04 mm liegt.

## Claims

**1.** A process for the preparation of screen fractions of bead-form, expandable styrene polymers prepared by suspension polymerization, which comprises intimately mixing the beads, which are still moist at the surface, with from 0.02 to 0.25% by weight, based on the dry styrene polymer, of a coating composition comprising

($c_1$) a bisamide made from a $C_2$-$C_8$-alkylenediamine and an aliphatic $C_6$-$C_{20}$-carboxylic acid and

($c_2$) a conventional antistatic

in a ($c_1$):($c_2$) weight ratio of from 1 to 50, subsequently removing the surface water by flash drying at a temperature of from 30 to 65 °C for from 1 to 10 seconds, then separating the dry, coated beads into screen fractions, and, if desired, subsequently applying further amounts of coating composition or coating composition mixture onto the individual fractions.

**2.** A process as claimed in claim 1, wherein ($c_1$) is N,N'-bisethylenestearamide and ($c_2$) is a $C_{14}$-$C_{17}$-alkyl sulfonate.

**3.** A process as claimed in claim 2, wherein component ($c_1$) of the coating composition comprises more than 80% by weight of particles whose diameter is less than 0.07 mm.

**4.** A process as claimed in claim 3, wherein component ($c_1$) of the coating composition comprises more than 90% by weight of particles whose diameter is less than 0.04 mm.

## Revendications

**1.** Procédé de préparation de fractions tamisées de polymères de styrène expansibles en forme de perles préparées par polymérisation en suspension, caractérisé par le fait que l'on mélange intimement les perles encore humides en surface avec 0,02 à 0,25 % en poids, rapporté au polymère de styrène séché, d'un agent d'enduction constitué par

($C_1$) un bisamide d'un alkylène diamine en C2-C8 et d'un acide carboxylique en C6-C20 alyphatique et

($C_2$) un antistatique usuel

le mélange étant effectué dans un rapport en poids ($C_1$) : ($C_2$) de 1 à 50, on élimine ensuite l'eau superficielle par séchage éclair à une température comprise entre 30 et 65 °C pendant 1 à 10 secondes, on sépare alors en fractions terminées les perles enduites, sèches, et éventuellement on applique à la suite sur des différentes fractions d'autres quantités d'agent d'enduction ou de mélange d'agents d'enduction.

**2.** Procédé selon la revendication 1, caractérisé par le fait que ($C_1$) est N,N'-biéthylènstéaramide et ($C_2$) alkyle (en C14-C17)-sulfonate.

**3.** Procédé selon la revendication 2, caractérisé par le fait que le composant d'agent d'enduction ($C_1$) se trouve à plus de 80 % en poids en particules dont le diamètre est inférieur à 0,07 mm.

**4.** Procédé selon la revendication 3, caractérisé par le fait que le composant d'agent d'enduction ($C_1$) se trouve à plus de 90 % en poids en particules dont le diamètre est inférieur à 0,04 mm.